Europäisches Patentamt

European Patent Office

Office européen des brevets

(19)

(11) **EP 1 517 313 A1**

(12) **EUROPEAN PATENT APPLICATION**
published in accordance with Art. 158(3) EPC

(43) Date of publication:
**23.03.2005 Bulletin 2005/12**

(51) Int Cl.7: **G11B 7/085**

(21) Application number: **03811875.8**

(22) Date of filing: **19.09.2003**

(86) International application number:
**PCT/JP2003/011967**

(87) International publication number:
**WO 2004/049321 (10.06.2004 Gazette 2004/24)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.11.2002 JP 2002343036**

(71) Applicant: **Hamamatsu Metrix Co., Ltd.**
**Hamamatsu-shi, Shizuoka 431-2103 (JP)**

(72) Inventor: **ICHIFUJI, Katsumi**
**Hamamatsu-shi, Shizuoka 431-2103 (JP)**

(74) Representative: **VOSSIUS & PARTNER**
**Siebertstrasse 4**
**81675 München (DE)**

(54) **OPTICAL DISC ECCENTRIC AMOUNT MEASUREMENT DEVICE AND ECCENTRIC AMOUNT MEASUREMENT METHOD USING THE SAME**

(57)  The present invention provides an eccentricity measuring device and an eccentricity measuring method which can measure the eccentricity of an optical disc such as a DVD, a CD, an MO or the like with the simple constitution and also with accuracy. To realize the device and the method, an optical disc W is rotatably driven by a rotational drive part 11, spot lights are irradiated to a signal recording surface of the optical disc W and a reflection light is received by a group of light receiving elements A, B, C, D of an optical pickup part 12, a focusing error signal is generated by an FE signal generating circuit 14 upon receiving light reception information SA, SB, SC, SD from the group of light receiving elements, a tracking error signal is generated by a TES signal generating circuit 20 upon receiving the light reception information from the group of light receiving elements, a frequency of the tracking error signal is converted into a voltage value by a frequency-voltage converting circuit 21 upon receiving a tracking error signal which is generated by the TES signal generating circuit, and a rotational rectangular wave signal indicative of a rotational angle of the optical disc W is received from the rotational drive part 11, and then, the eccentricity of an optical disc is calculated.

Fig.1

EP 1 517 313 A1

## Description

Technical Field

The present invention relates to an eccentricity measuring device and an eccentricity measuring method of an optical disc, and more particularly to an eccentricity measuring device and an eccentricity measuring method which measures eccentricity of an optical disc such as a DVD, a CD, a MO or the like.

Background Art

With respect to an optical disc, data stored in tracks formed concentrically is reproduced using an optical pickup part of an optical disc reproducing device.

A distance between the tracks is determined by a Standard of optical disc and is accurately formed such that, for example, the distance is a pitch of 1.6μm in case of the CD and a pitch of 0.74μm in case of the DVD.

Further, at a center of the optical disc, there is provided a center hole which is mechanically formed by boring to mount the optical disc on a spindle at the center of a spindle motor using a clamp device and hence, the center (track center) of the above-mentioned tracks concentrically formed is formed with a zero displacement on design with respect to the center of the center hole (the rotational center of the optical disc).

However, in an actual state, due to a plurality of causes on the manufacture thereof in which the optical disc is generally formed by a mold using polycarbonate as a material, there exists eccentricity of approximately 10μm to 100μm between the rotational center of the optical disc and the track center. When this eccentricity is large, the tracking servo of the pickup part is not smoothly operated and hence, the accurate data reproduction cannot be achieved.

Accordingly, as a measuring method of the eccentricity of the optical disc for measuring a magnitude of the eccentricity of the optical disc, conventionally, there have been proposed various methods including

(1) an optical stylus method which uses an optical pickup or an image analysis method which uses a CDD camera,
(2) a laser diffracted beam method which uses laser n-order diffracted beams, and
(3) a simple method which, when a track pitch is fixed with respect to an optical disc such as a CD, fixes a tracking servo and counts a number of tracking errors attributed to the eccentricity.

(i) The optical stylus method which uses the optical pickup in the above-mentioned (1) is a method which applies a focusing servo and a tracking servo to a recording surface of a rotating disc and obtains the eccentricity of the disc based on the behavior of a pickup object lens (see "Denshi Zairyo (electronic material)" issued on June, 19996, "Optical disc mechanical characteristics measuring device applicable to DVD".

(ii) The image analysis method using the CCD camera shown in the above-mentioned (1) is a method which directly measures a movement amount in an image of an edge of a recording part using a CCD camera of high magnification at an outermost periphery or an innermost periphery of the recording part (see "National Technical Report", Vol. 43 No.3, June issue, 1997).

(iii) The laser diffracted light measuring method which uses the laser diffracted light in the above-mentioned (2) is a method which irradiates laser spot beams to positions on the same radially concentric circle of a recording surface of the optical disc which are away from each other accurately at a right angle, that is, at 90° and analyzes the behavior of n-order diffracted light of these laser spot beams thus calculating the eccentricity (see Japanese Unexamined Patent Publication Hei9(1997)-229650).

(iv) The simplified method which fixes the tracking servo and counts the number of tracking errors attributed to the eccentricity when the track pitch of the CD or the like in the above-mentioned (3) is fixed is a method which obtains the eccentricity in which a spindle rotation origin, that is, a measurement origin is set, and the number of errors which appear in one rotation is simply counted and the number of track errors is multiplied with the track pitch (see Japanese Unexamined Patent Publication Hei10 (1998)-143894).

The above-mentioned method (i) has drawbacks such that to detect the behavior of an object lens using a sensor and to improve the response performance of the measuring frequency, an expensive special optical pickup which exhibits high response performance is required and errors are also large in number since a physical phenomenon per se is not measured.

The above-mentioned method (ii) has drawbacks such that the method requires a rapid image input device and a rapid image processing device and hence, the devices become expensive and, at the same time, with respect to a DVD, recording surfaces of inner layers which are laminated to each other cannot be observed and hence, the eccentricity characteristics of the inner-layer recording surfaces cannot be measured.

The above-mentioned method (iii) has drawbacks such that it is necessary to irradiate the laser spots at positions on the radially same concentric circle of the recording surface of the optical disc which are separated at a right angle, that is, at 90° and hence, the determination of the measuring position becomes complicated, whereby the error in positioning directly leads to the error in measurement and, at the same time, with respect to the case of the DVD, laminated inner layers cannot be sensed whereby the eccentricity characteristics of the inner-layer recording surfaces cannot be measured.

The above-mentioned method (iv) has drawbacks such that it is necessary to specify the position of the rotational origin and, at the same time, with respect to an optical disc having a header part formed of address marks and the like in an MO, a DVD-RAM or the like, track error signals cannot be counted accurately and hence, errors are generated frequently thus making the measurement impossible.

It is an object of the present invention to provide an eccentricity measuring device and an eccentricity measuring method which can measure the eccentricity of an optical disc such as the DVD, the CD, the MO or the like with the simple constitution and, at the same time, with accuracy.

Disclosure of the Invention

An eccentricity measuring device of the present invention includes a rotational drive part which rotatably drives an optical disc and outputs a rotational angle rectangular wave signal indicative of a rotational angle of the optical disc, an optical pickup part which irradiates spot lights to a signal recording surface of the optical disc and receives a reflection light using a group of light receiving elements, an FE signal generating circuit which generates a focusing error signal upon receiving light reception information from the group of light receiving elements, a TES signal generating circuit which generates a tracking error signal upon receiving the light reception information from the group of the light receiving elements, and a frequency-voltage converting circuit which generates a frequency displacement signal by converting a frequency of the tracking error signal into a voltage value upon receiving the tracking error signal which is generated by the TES signal generating circuit, wherein the eccentricity measuring device calculates the eccentricity of the optical disc upon receiving the rotational rectangular wave signal, upon receiving the focusing error signal, and upon receiving the frequency displacement signal.

In the above-mentioned eccentricity measuring device of the optical disc, it is preferable that the group of light receiving elements is formed of four photo diodes which constitute one set.

An eccentricity measuring method of an optical disc according to the present invention computes the eccentricity of an optical disc such that the optical disc is rotatably driven by a rotational drive part, spot lights are irradiated to a signal recording surface of the optical disc and a reflection light is received by a group of light receiving elements of an optical pickup part, a focusing error signal is generated by an FE signal generating circuit upon receiving light reception information from the group of light receiving elements, a tracking error signal is generated by a TES signal generating circuit upon receiving the light reception information from the group of light receiving elements, a frequency of the tracking error signal is converted into a voltage value by a frequency-voltage converting circuit upon receiving a tracking error signal which is generated by the TES signal generating circuit, and a rotational rectangular wave signal indicative of a rotational angle of the optical disc is received from the rotational drive part.

In the eccentricity measuring method of the optical disc, it is preferable that the group of light receiving element is formed of photo diodes which constitute one set.

Brief Description of the Drawings

Fig. 1 is a circuit constitutional view of an eccentricity measuring device showing one embodiment of the present invention.

Fig. 2 is a schematic plan view for explaining the center of rotation of an optical disc and a mode of eccentricity of tracks formed on the optical disc.

Fig. 3 is a schematic explanatory view of a group of light receiving elements A, B, C, D which are mounted on an optical pickup part.

Fig. 4(a) to Fig. 4(c) are explanatory views, wherein Fig. 4(a) shows signal modes of light reception information SA, SB, SC, SD which are transmitted from 4 divided diodes A, B, C, D, Fig. 4(b) indicates a phase of the light reception information SA transmitted from the diode A and a phase of the light reception information SD transmitted from the diode A, and Fig. 4(c) indicates a phase of the light reception information SB transmitted from the diode B and a phase of the light reception information SC transmitted from the diode C.

Fig. 5(a) is a TES signal waveform chart which is obtained by performing the calculation described in a formula (2) based on the light reception information SA, SB, SC, SD obtained based on a locus of laser irradiated beam corresponding to one rotation of the optical disc shown in Fig. 2. Fig. 5(b) is a TES signal waveform chart showing a portion of the light reception information in an enlarged manner.

Fig. 6(a) is a schematic view of a TES signal corresponding to one rotation of the optical disc which is obtained by calculation at a TES signal generating circuit. Fig. 6(b) is a schematic view which generates a waveform of a voltage value V (an axis of ordinates)- a rotational angle of optical disc (an axis of abscissas) transmitted from the rotational drive part by taking a rotational rectangular wave signal indicative of the rotational angle of the optical disc on the axis of abscissas.

Fig. 7(a) is a converted waveform of frequency-voltage which is inputted to an A-D converter 31 from a frequency-voltage converting circuit 21 before performing the curve interpolation processing, and Fig. 7(b) shows the converted waveform of the frequency-voltage after the curve interpolation processing.

Fig. 8 is a flowchart showing the manipulation for detecting the eccentricity of the optical disc using the optical disc eccentricity measuring device according to the present invention.

Best Mode for carrying out the Invention

An eccentricity measuring device according to the present invention is explained in detail in conjunction with drawings.

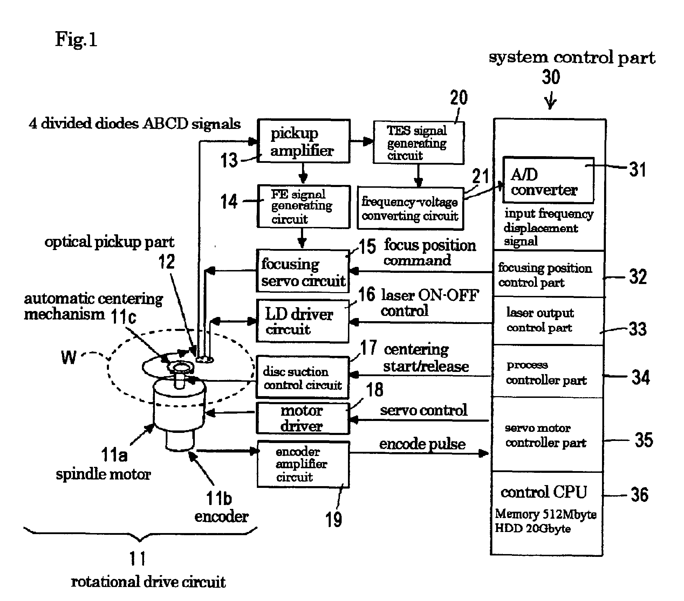

Fig. 1 is a circuit constitutional view of the eccentricity measuring device showing one embodiment of the present invention. In Fig. 1, the eccentricity measuring device 10 includes a rotational drive part 11 which rotatably drives an optical disc W, an optical pickup part 12 which irradiates laser beams to the optical disc W and outputs light reception information from a reflection light, a pickup amplifying part 13 which amplifies the light reception information from the pickup part 12, a FE signal generating circuit 14 which generates a focusing error signal (FE signal) upon receiving the light reception signal amplified by the pickup amplifying part 13, a focus servo circuit 15 which applies a focus servo to the optical pickup part 12 upon receiving an output signal from the FE signal generating circuit 14, an LD driver circuit 16 which controls a laser output of the optical pickup part 12, a disc suction control circuit 17 which controls mounting and dismounting of the optical disc W to a spindle, a motor driver 18 which controls the rotation of the spindle, an encoder amplifying circuit 19 which amplifies a signal from an encoder 11b, a TES signal generating circuit 20 which generates a tracking error signal (TES signal) upon receiving light reception information amplified by the pickup amplifying part 13, a frequency-voltage converting circuit 21 which generates a frequency displacement signal by converting a frequency of the tracking error signal into a voltage value upon receiving the tracking error signal generated by the TES signal generating circuit 20, a system controller part 30 which controls a system of the whole measuring device 10 and the like.

The rotational drive circuit 11 includes a spindle motor 11a, an encoder 11b and an automatic centering mechanism 11c, wherein it is possible to rotate the optical disc W by clamping the optical disc W between a turntable on which the optical disc W is placed and a disc clamper and driving the spindle motor 11a.

The spindle motor 11a receives a motor control signal from the system controller part 30 and rotates the spindle or stops the rotation by way of the motor driver 18.

The automatic centering mechanism 11c includes both of a mechanism for automatically performing the centering of the center of rotation of the optical disc W with respect to the spindle and a mechanism to rotate the optical disc W and holds the rotation.

In mounting the optical disc W on the turntable, upon receiving a disc suction control signal from the disc suction control circuit 17, the optical disc W is sucked and is centered to the spindle.

The rotational drive part 11 includes the encoder 11b for detecting a rotational angle of the optical disc W and a given number of rotational angle rectangular wave signals are outputted for every one rotation of the optical disc W.

By counting the rectangular waves, it is possible to detect the rotational angle of the rotational drive part 11 and the optical disc W.

Further, the encoder 11b is directly connected with a servo motor rotary shaft of the spindle motor 11a and hence, rotation rectangular wave signals corresponding to the rotational speed are outputted from the encoder 11b and these rotation rectangular wave signals are transmitted to a servo motor controller part 35 of the system controller part 30 and hence, the rotational speed is grasped whereby the rotational control of the spindle motor 11a can be performed.

The optical pickup part 12 irradiates spot lights such as laser beams to a signal recording surface of the optical disc W and receives the reflection lights using a group of light receiving elements (for example, four-divided light receiving elements A, B, C, D) and transmits the light receiving information which these light receiving elements receive to the pickup amplifying part 13.

Further, on the optical pickup part 12, a beam director (not shown in the drawing) which outputs an error signal of the tracking error signal is mounted.

In the present invention, with respect to the optical pickup part 12 which constitutes a light receiving part of laser reflection light, as an embodiment, it is preferable to use an optical pickup which includes four photo diodes as a set (four divided diodes). Further, it is preferable that when the optical disc W is placed on the turntable, the optical pickup part 12 is fixedly arranged at an arbitrary radial position below a lower surface of a recording part of the optical disc W.

In this embodiment, as shown in Fig. 1, a set of optical pickups are disposed below the lower surface of the optical disc recording part. However, provided that the optical pickups can irradiate the laser beams to the optical disc recording part and can receive the reflection signal, the mounting position and the number of the pickups are not limited.

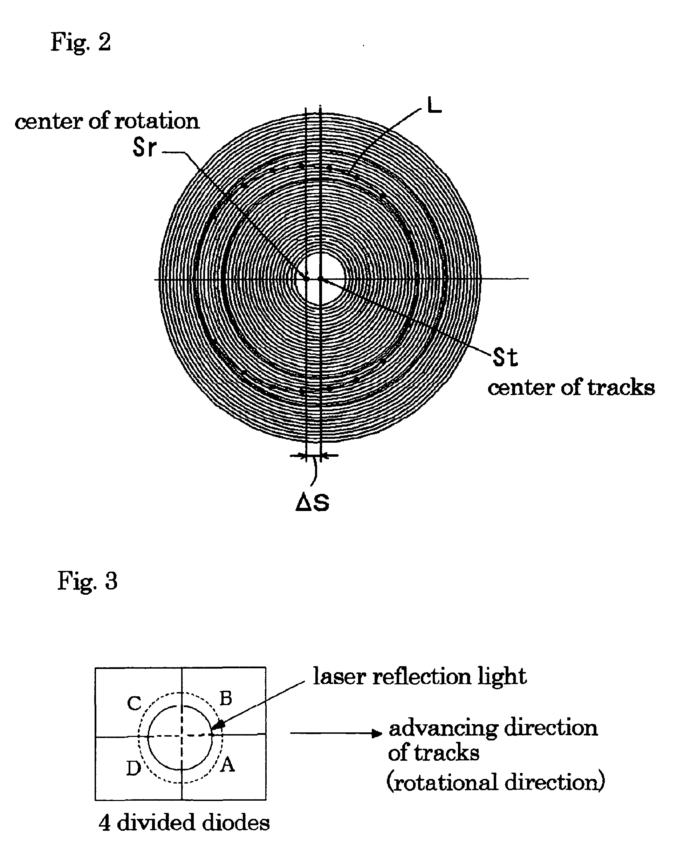

The pickup amplifying part 13 amplifies light reception information SA, SB, SC, SD (read-out signals) which a group of light receiving elements A, B, C, D (see Fig. 3) mounted on the optical pickup part 12 respectively receive and transmits the amplified signals to a TES signal generating circuit 20 and a FE signal generating circuit 14.

The FE signal generating circuit 14 calculates the light reception information SA, SB, SC, SD which are amplified by the pickup amplifying part 13 using an analogue circuit and generates the FE signal (focusing error) expressed by a following formula (1).

$$(SA + SC) - (SB + SD) = FE \qquad (1)$$

When the FE signal approximates 0, this implies that the focusing is made with respect to the optical disc recording part and when the FE signal deviates in the + direction or in the - direction, this implies that the focusing is displaced.

The focusing servo circuit 15 receives an FE signal from the FE signal generating circuit 14 and applies a focusing servo to the optical pickup part 12 until the FE signal becomes 0 and adjusts a distance between the optical disc recording part and light receiving lens of the optical pickup part 12.

On the other hand, in the present invention, it is unnecessary to operate the tracking servo and hence, the tracking servo is not used (is fixed).

The LD driver circuit 16 controls an ON/OFF of a laser source (not shown in the drawings) constituting a laser irradiation source mounted on the optical pickup part 12. Further, the LD driver circuit 16 includes a feedback circuit for light receiving amounts from the group of light receiving elements A, B, C, D mounted on the optical pickup part 12 and controls an irradiation quantity of the laser source to a given luminance.

The TES signal generating circuit part 20 calculates the respective light reception information SA, SB, SC, SD which are amplified by the pickup amplifying part 13 using an analog circuit and obtains a TES signal (a tracking error signal) which is expressed by a following formula (2).

$$(SA + SD) - (SB + SC) = TES \qquad (2)$$

The TES signal indicates the deviation of the laser reflection light with respect to the rotation advancing direction (tracking direction) of the optical disc and takes a large peak value when a boundary between lands (mountains of the tracks) and grooves (valleys of the tracks) is clear. In this embodiment, the eccentricity of the optical disc is measured upon receiving the tracking error signal.

The frequency-voltage converting circuit 21 removes high frequency components in the TES signal which constitutes an analog signal from the TES signal generating circuit part 20 as noises using an integration circuit and, at the same time, receives the TES signal from the TES signal generating circuit part 20 and converts the frequency displacement signal F corresponding to the frequency of the tracking error signal to a given voltage V thus generating an input signal to an A/D converter 31.

The system controller part 30 which controls the whole system of the optical disc eccentricity measuring device 10 of the present invention includes the A/D converter 31, the focusing position control part 32, the laser output control part 33, the process controller part 34, a servo motor controller part 35 and the control CPU part 36.

The A/D converter 31 performs the quantization conversion upon receiving the frequency displacement signal F from the frequency-voltage converting circuit 21 and records the converted signal in a maim memory of the control CPU part 36.

The focus position control part 32 commands a focusing operation of the optical pickup part to the focusing servo circuit 15 based on a command to the focusing servo circuit 15 from the control CPU part 36 and, at the same time, commands a focusing position of the optical pickup part when the optical disc having a plural layered structure such as a DVD or the like is measured. Here, a control to set the FE signal to 0 is performed using the focusing servo circuit 15.

The laser output control part 33 commands starting and stopping of the laser source irradiation to the LD driver circuit 16 based on a command from the control CPU part 36.

The process controller part 34, based on a command from the control CPU part 36, transmits a command to the disc suction control circuit 17 so as to make the automatic centering mechanism 11c perform the centering control and commands the disc suction control circuit 17 to perform mounting by suction and detachment of the optical disc W to the turn table.

The servo motor controller part 35 commands a rotational control of the spindle motor to the motor driver 18. The rotational control, upon receiving the rotational rectangular wave signal from the encoder 11b, controls the spindle motor 11a such that the spindle motor assumes a given rotational speed and, at the same time, controls the rotation and stopping of the spindle motor.

The control CPU part 36 systematically controls the whole system of the optical disc measuring device 10 of the present invention and, at the same time, performs a curve interpolation processing arithmetic operation of a curve (a frequency converted potential curve described later) which is formed based on a frequency displacement signal which is obtained by converting the frequency of the tracking error signal into a voltage value (axis of abscissas) and the rotational angle (axis of ordinates).

Further, a main memory, an HDD storage device and the like are mounted on the control CPU part 36 so as to enable the rapid arithmetic processing.

The eccentricity of the optical disc is measured in a following method using the optical disc measuring device 10 of the present invention.

(1) The optical disc W is centered to the rotational center of the spindle of the spindle motor 11a using the automatic centering mechanism 11c and is sucked to the turn table.

(2) The optical disc W is rotated at a fixed speed using the spindle motor 11a. Whether the rotational speed of the optical disc W reaches the fix speed or not is determined by monitoring the signal from the encoder 11b at the servo motor controller part 35.

(3) Laser beams are irradiated to the optical disc W from the optical pickup part 12 and the optical pickup part 12 receives the reflection light.

(4) The focusing servo control is applied based on the FE signal generated from the light reception information from the optical pickup part 12.

(5) Since the tracking servo is held in an Off state (fixed), the changeover information which is generated due to the traversing of the irradiated laser light over the land and the groove is received directly as light reception information in a form of an analogue signal for at least one periphery.

(6) The velocity that the irradiated laser beam traverses the land and the groove in response to the eccentricity is increased corresponding to the increase of the eccentricity and the light receiving information as the changeover information assumes the sinusoidal signal. This sinusoidal analogue signal is received as an analogue signal through the frequency-voltage converting circuit 21 and is analyzed as the frequency displacement signal.

(7) At the time of analyzing the frequency displacement signal F, a header portion which is referred to as an address mark or noise components or high frequency components attributed to defects or the like, if they are present, are reduced by the integration circuit incorporated into the frequency-voltage converting circuit 21.

(8) Further, to finely remove the influence of the noise components due to the address mark, the defects or the like, the accuracy of measurement is enhanced by performing the curve interpolation processing arithmetic operation of the fetched waveform.

Next, the above-mentioned method for measuring the eccentricity of the optical disc is explained in detail in conjunction with Fig. 2 to Fig. 8.

First of all, by rotating the optical disc W at a fixed rotational speed using the rotational drive part 11, the laser irradiation source of the optical pickup part 12 which is preliminarily arranged at a given position is turned on so as to irradiate the laser beams to the recording part of the optical disc W.

Upon receiving the light reception information from the reflected light, a command is transmitted to the focusing servo circuit 15 such that the FE signal assumes 0 and, thereafter, the light reception lens of the optical pickup part 12 is focused and hence, the land and groove changeover information of the optical disc recording surface is read from the light reception information.

Fig. 2 is a schematic plan view for explaining the rotary center of the optical disc and the mode of eccentricity of the tracks formed on the optical disc.

As shown in Fig. 2, when the tracking servo of the optical pickup part 12 assumes an OFF state (fixed) and the optical disc W is rotated, since the track center St is slightly displaced ($\Delta$S) from the mechanical rotary center Sr (spindle center), when the optical disc W is rotated, the locus L of the laser irradiation light traverses the lands and grooves of the tracks which are formed on the optical disc W. This displacement quantity ($\Delta$S) constitutes the eccentricity of the optical disc W.

On the other hand, in the embodiment of the present invention, the light receiving elements which receive the laser reflection light which are provided to the optical pickup part 12 use 4 divided diodes A, B, C, D and generate four kinds of light reception information from the reflected light.

Four kinds of light reception information SA, SB, SC, SD which are transmitted from four divided diodes A, B, C, D include various information such as the intensity of reflection light from respective lands and grooves, a state of boundary between the lands and the grooves and the like and are served for arithmetic processing such as the generation of the FE signal and the TES signal described later.

Here, a state of boundary between the lands and the grooves implies a state such as a rising gradient of walls of the grooves, for example.

Fig. 3 is an explanatory view showing the mounting state of four divided diodes A, B, C, D used in the embodiment of the present invention. As shown in Fig. 3, in the optical pickup part 12, four divided diodes A, B, C, D are provided close to each other in the counterclockwise direction and the reflected laser light is received by the single photo diode or a plurality of photo diodes.

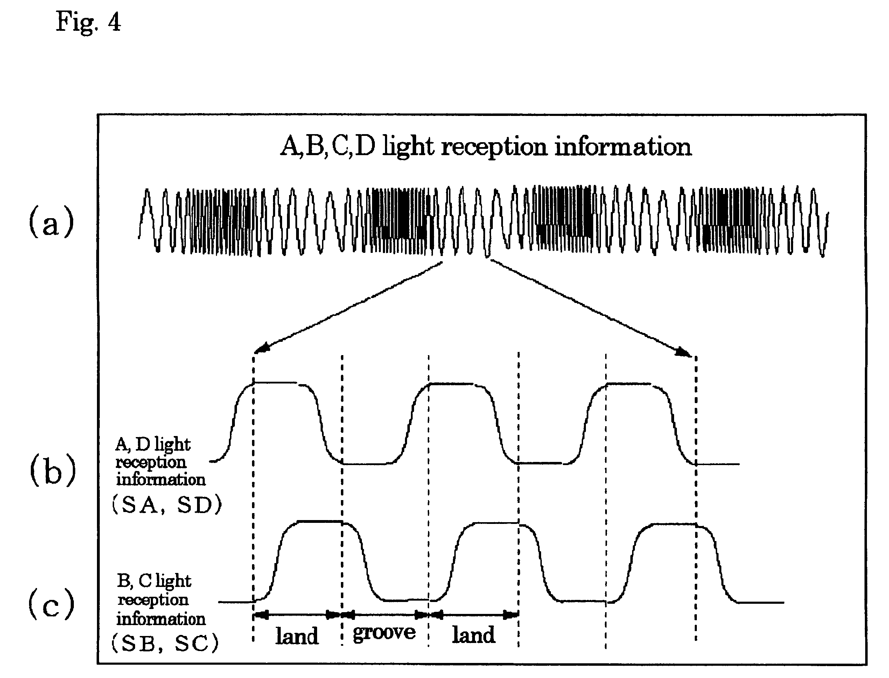

Fig. 4(a) shows the signal modes of the light reception information SA, SB, SC, SDwhich are transmitted from four divided diodes A, B, C, D upon receiving reflected laser light. Further, as shown in Fig. 4(b), the light reception information SA transmitted from the diode A and the light reception information SD transmitted from the diode D assume the substantially equal phases, while as shown in Fig. 4(c), the light reception information SB transmitted from the diode B and the light reception information SC transmitted from the diode C assume the substantially equal phases.

Then, the light reception information SA and the light reception information SD as well as the light reception information SB and the light reception information SC indicate the signal modes in a state that the phases are displaced. [Arithmetic operation in the FE signal generating circuit and the TES signal generating circuit]

Next, upon receiving the light reception information SA, the light reception information SB, the light reception information SC and the light reception information SD from the pickup amplifier 13, these light reception information are subjected to the arithmetic processing in the FE signal generating circuit 14 and the TES signal generating circuit 20 thus obtaining the FE signal and the TES signal which are expressed by following formula (1) and the formula (2).

$$(SA + SC) - (SB + SD) = FE \text{ signal} \qquad (1)$$

The FE signal obtained by the formula (1) is used at the time of applying focusing to the optical pickup part 12 using the focusing servo circuit 15. That is, when the light receiving lens of the optical pickup part 12 is focused on the recording part of the optical disc, the FE signal approximates 0 and is found to be displaced from focusing when the light reception lens deviates in the + direction or in the - direction.

$$(SA + SD) - (SB + SC) = TES \text{ signal} \qquad (2)$$

The TES signal obtained by the formula (2) indicates the deviation of the laser reflection light with respect to the advancing direction of the rotation of the optical disc (tracking direction), wherein the TES signal assumes a large peak value when the boundary between the land and the groove is clear.

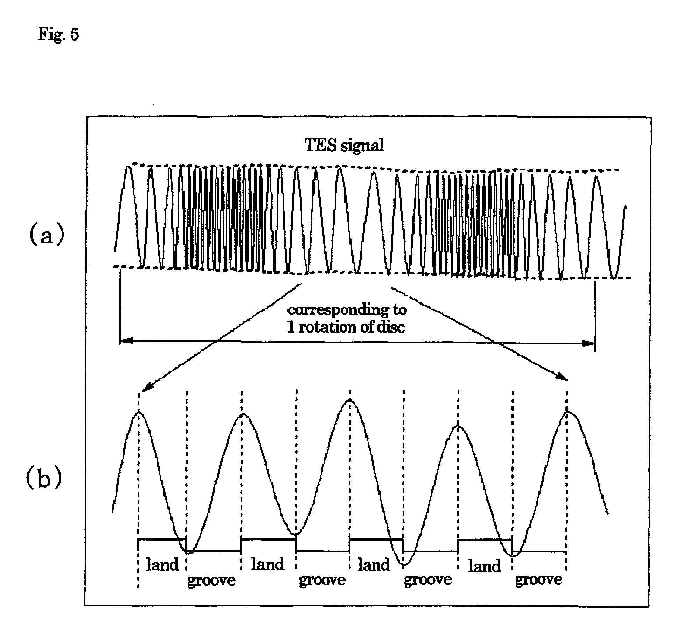

Fig. 5(a) shows a TES signal waveform which is obtained by calculation using the above-mentioned formula (2) based on the light reception information SA, SB, SC, SD obtained based on a locus of the laser irradiation light for one rotation of the optical disc shown in Fig. 2. Fig. 5(b) shows a portion of the TES signal waveform in an enlarged manner.

As shown in Fig. 5(a), the TES signal has the dense waveform at a portion where a time interval that the laser irradiation light transverses the land and the groove is short and becomes coarse at a portion where the time interval is long thus exhibiting a so-called compressional waveform.

Further, as shown in Fig. 5(b), it is understood that the waveform of the TES signal assumes a sinusoidal wave mode.

(Frequency-voltage conversion)

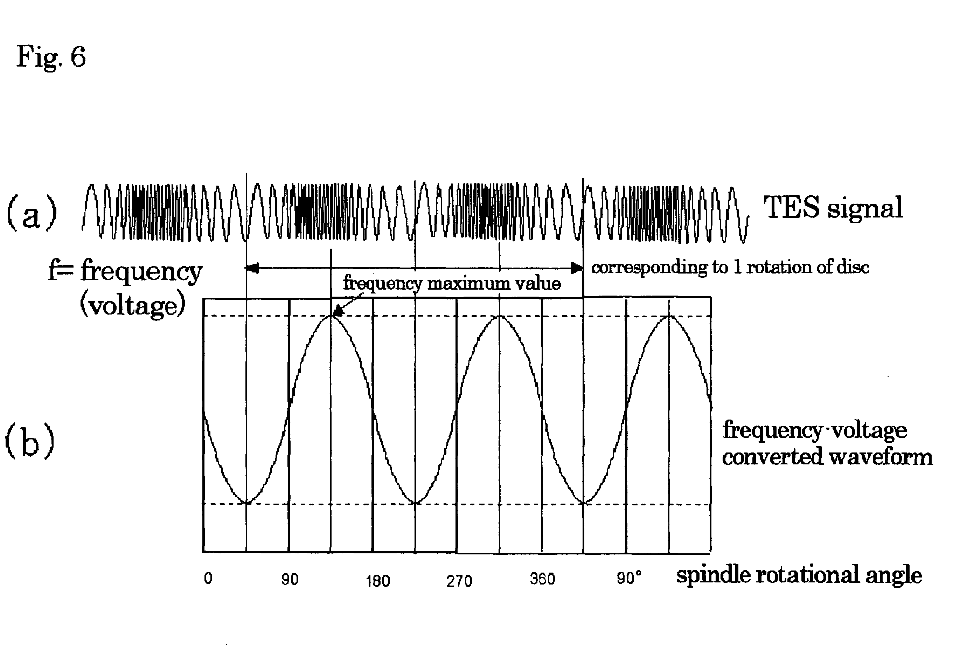

Next, the TES signal (shown in Fig. 6(a)) corresponding to one rotation of the optical disc W which is obtained by performing the arithmetic operation at the TES signal generating circuit is transmitted to the frequency-voltage converting circuit 21, wherein the frequency of the TES signal is converted into a voltage value V and this value is set as a value taken along an axis of ordinates.

On the other hand, by taking the rotational rectangular wave signal indicative of the rotational angle of the optical disc transmitted from the rotational drive part 11 on an axis of abscissas, the rotational drive part 11 generates a voltage value V (axis of ordinates)-rotational angle of optical disc (axis of abscissas) waveform. This generated waveform (frequency-voltage converted waveform) is shown in Fig. 6(b).

As can be understood from the comparison of Fig. 6(a) and Fig. 6(b), the voltage value V is high at the portion where the TES signal waveform is dense and is low at a portion where the TES signal waveform is coarse.

Here, the fact that the spindle motor 11a is accelerated so that the rotational speed assumes a fixed value or the fact that the optical disc W is rotated by one revolution can be accurately grasped by monitoring the rotational rectangular waveform using the encoder 11b.

(Arithmetic operation of eccentricity)

Next, the explanation is made with respect to the case in which the arithmetic operation of the eccentricity of the optical disc is performed in conjunction with Fig. 6. First of all, assuming the rotational speed of the optical disc as N rpm, the rotational speed during one second becomes N/60.

The long period frequency dependent on the rotational speed which is obtained attributed to the fact that the optical disc is eccentric (that is, frequency shown in Fig. 6(b)) brings about changes twice per one rotation of the disc and hence, the long period frequency is set as 2N/60 Hz.

Further, assuming the land/groove changeover information as K, the average frequency f of the short period frequency attributed to traversing of the laser beam due to the eccentricity of the optical disc (that is, frequency of the TES signal in Fig. 6 (a) = change along with a lapse of time) becomes f = 2KN/60.

To obtain the land/groove changeover information K from the above data, the land/groove changeover information K is expressed by a following formula (3)

$$K = 60f/2N = 30f/N \qquad (3)$$

Here, assuming a track pitch of the optical disc as Tμm, the eccentricity of the optical disc is the track pitch × land/groove change over information K and hence, the eccentricity is expressed as follows.

$$\text{eccentricity} = T \times K \ \mu m = (30f/N)$$

That is, even when the number of tracks which are traversed due to the eccentricity of the optical disc is not directly counted, it is possible to calculate the eccentricity of the optical disc based on the rotational speed N rpm when the optical disc is rotated and the average frequency f of the TES signal when the rotational speed is N rpm.

Accordingly, by putting, for example, the track pitch T = 1.6μm of CD and the track pitch T = 0.74μm of DVD into the above-mentioned formula (3), it is possible to obtain the respective eccentricities. Also with respect to the other optical discs which have track pitches different from the above track pitches, it is possible to obtain the eccentricities by performing the substantially equal arithmetic processing.

(Curve interpolation processing)

In the recording media such as an MO or a DVD-RAM, a header part such as an address mark is present on the recording surface of the optical disc and hence, the irregularities arises with respect to the light reception information whereby there may be a case that noises are present in the frequency-voltage converted waveform. Further, also when defects such as surface flaws, inside inclusions, pin holes are present on the recording surface, there may be a case that noises are present in the frequency-voltage converted waveform in the same manner.

These noises which are present in the frequency-voltage converted waveform become a cause which generates errors in the measurement of eccentricity and hence, according to the present invention, an integration circuit is provided to the inside of the frequency-voltage converting circuit so as to perform the improvement of the waveform by removing the noises from the frequency-voltage converted waveform and, thereafter, the curve interpolation processing (approximation calculation processing) is performed by data sampling whereby the more accurate and precise measurement of eccentricity can be realized.

Here, the data sampling in the curve interpolation processing (approximation calculation processing) implies processing in which the sampled voltage data having a conspicuous value in view of the voltage data before and after the sampled voltage data is cut or ignored and the data having an approximate value of data before and after the sampled data is filled in the cut portion.

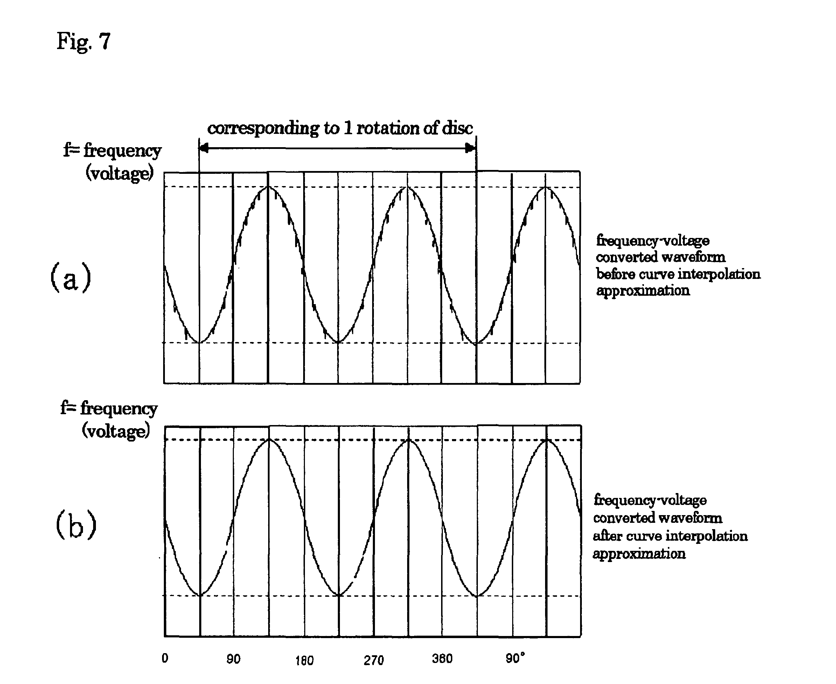

Fig. 7 shows a result of the curve interpolation processing performed using the MO media having address marks.

Fig. 7(a) shows the frequency-voltage converted waveform before the curve interpolation processing which is inputted to the A/D converter 31 from the frequency-voltage converting circuit 21. Fig. 7(b) shows the frequency-voltage converted waveform after the curve interpolation processing. It is understood that in the frequency-voltage converted waveform after the curve interpolation processing, noises which are generated from the address mark present before the processing are removed from the waveform thus exhibiting the improved smooth waveform and, at the same time, the smoothing processing is performed so as to interpolate spaces of the curve after removing noises.

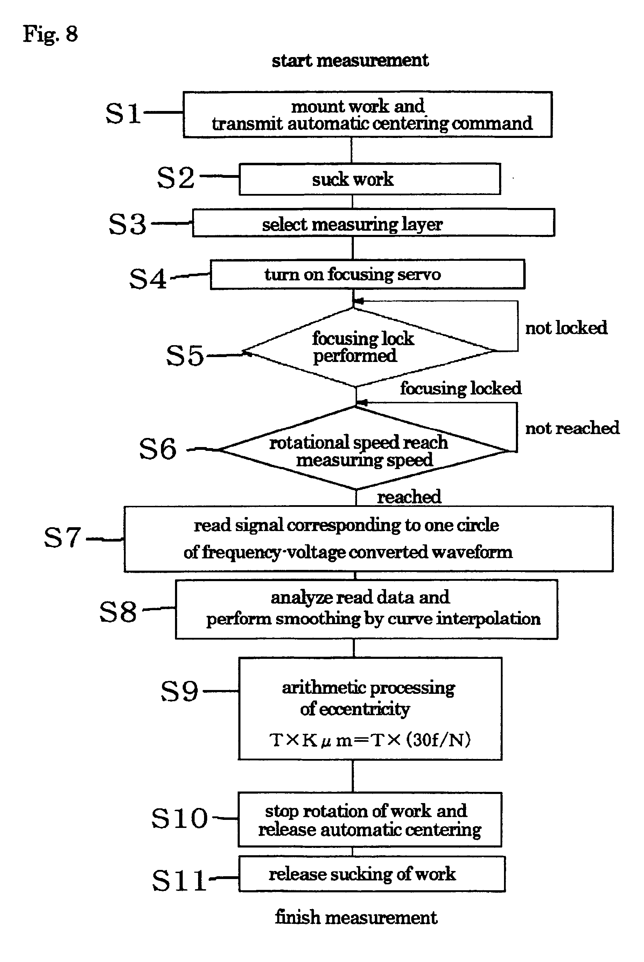

Next, the manipulation in measuring the eccentricity of the optical disc using the optical disc eccentricity measuring device according to the present invention is explained in more detail using the flow chart shown in Fig. 8.

First of all, the optical disc (work) W to be measured is placed on the turntable and a work centering command is transmitted to the automatic centering mechanism 11c from the process controller part 34 of the system controller part 30 (S1).

After completion of the centering, the disc suction control circuit 17 makes the work W sucked to the turntable (S2).

Next, since a plurality of recording layers are present in the DVD media or the like, the layer to be measured is selected by the focusing position control part 32 (S3) and the focusing servo circuit 15 is turned on (S4).

Next, the focusing position is locked (S5) and the work W which constitutes a measuring object is rotated in response to the instruction from the servo motor controller part 35.

In response to the signal from the encoder 11b, the servo motor controller part 35 determines whether the rotational speed of the work W reaches the measuring speed or not (S6).

Then, the control CPU part 36 reads the signal corresponding to one circle of the frequency-voltage converted waveform which is outputted from the frequency-voltage converting circuit 21 (S7), and analyzes the read data and performs the smoothing processing by performing the curve interpolation processing (S8).

Further, the control CPU part 36 analyzes the frequency-voltage converted waveform and performs the following arithmetic processing.

$$\text{eccentricity} = T \times K \mu m = T \times (30f/N) \text{ (S9)}$$

When the measurement is finished, the rotation of the work W is stopped in response to a command from the motor driver 18 and the automatic centering mechanism is released (S10).

Then, the suction of the work W is released in response to a command from the disc suction control circuit 17 (S11).

(Experiments)

Using the optical disc eccentricity measuring device of the present invention, the eccentricity of the optical disc is measured with following measuring accuracy. A result of the measurement is shown.

(Experiment 1)

Using the optical disc eccentricity measuring device of the present invention, the eccentricity of the CD and MD media is measured. As a result of the experiment 1, the automatic centering error is within ± 3µm, the measuring accuracy is within ± 2µm and the total accuracy is within ± 5µm. In this manner, the eccentricity can be measured with the extremely excellent accuracy.

(Experiment 2)

Using the optical disc eccentricity measuring device of the present invention, the eccentricity of the DVD and DVD-RAM is measured. As a result of the experiment 2, the automatic centering error is within ± 3µm, the measuring accuracy is within ± 1µm and the total accuracy is within ± 4µm. In this manner, the eccentricity can be measured with the extremely excellent accuracy.

It is understood from the results of the above-mentioned experiments that even with the relatively simple technique which uses the general-purpose optical pickup, the technique can exhibit the excellent accuracy which is completely comparable to any other technique.

(Industrial Applicability)

With the use of the optical disc eccentricity measuring device of the present invention, the optical pickup is arranged below the lower portion of the recording part of the optical disc, only the focusing servo is applied, and the tracking servo is turned off and is fixed. When the rotational speed of the optical disc is fixed, the frequency displacement of the analogue waves of the TES signal is monitored, and both of the waves having a long period proportional to the rotational speed of the optical disc and the waves having a short period which are generated such that the waves traverse the tracks are measured thus realizing the precise measurement of the eccentricity.

Further, the optical disc eccentricity measuring device of the present invention not only has the simple mechanism and can be constituted at an extremely low cost but also adopts the analogue waveform measurement of long and short frequencies and hence, provided that the data corresponding to one rotation is obtained, it is unnecessary to monitor the origin of rotation and, at the same time, no measurement error attributed to the address mark and the defects is induced.

Further, the optical disc eccentric measurement device of the present invention performs the curve interpolation processing also on the optical disc media such as the MO, the DVD-RAM whose measurement has been difficult conventionally and in which the header parts such as address marks are present whereby it is possible to perform the measurement of eccentricity with the extremely small error.

Still further, by applying the focusing from the pickup to the inner layers while moving, it is possible to perform the measurement of eccentricities of recording surfaces of laminated inner layers of the DVD or the like whereby it is possible to provide the eccentric measurement device of the optical disc having high accuracy.

**Claims**

1. An optical disc eccentricity measuring device comprising:

a rotational drive part which rotatably drives an optical disc and outputs a rotational angle rectangular wave signal indicative of a rotational angle of the optical disc;
an optical pickup part which irradiates spot lights to a signal recording surface of the optical disc and receives a reflection light using a group of light receiving elements;
an FE signal generating circuit which generates a focusing error signal upon receiving light reception information from the group of light receiving elements;
a TES signal generating circuit which generates a tracking error signal upon receiving the light reception information from the group of the light receiving elements; and
a frequency-voltage converting circuit which generates a frequency displacement signal by converting a frequency of the tracking error signal into a voltage value upon receiving the tracking error signal which is generated by the TES signal generating circuit, wherein
the eccentricity measuring device calculates the eccentricity of the optical disc upon receiving the rotational rectangular wave signal, upon receiving the focusing error signal, and upon receiving the frequency displacement signal.

2. An eccentricity measuring device of an optical disc according to claim 1, wherein the group of light receiving elements is formed of four photo diodes which constitute one set.

3. An eccentricity measuring method of an optical disc being **characterized by** calculating the eccentricity of an optical disc such that the optical disc is rotatably driven by a rotational drive part, spot lights are irradiated to a signal recording surface of the optical disc and a reflection light is received by a group of light receiving elements of an optical pickup part, a focusing error signal is generated by an FE signal generating circuit upon receiving light reception information from the group of light receiving elements, a tracking error signal is generated by a TES signal generating circuit upon receiving the light reception information from the group of light receiving elements, a frequency of the tracking error signal is converted into a voltage value by a frequency-voltage converting circuit upon receiving a tracking error signal which is generated by the TES signal generating circuit, and a rotational rectangular wave signal indicative of a rotational angle of the optical disc is received from the rotational drive part.

4. An eccentricity measuring method of an optical disc according to claim 3, wherein the group of light receiving elements is formed of four photo diodes which constitute one set.

Fig.1

system control part
30

4 divided diodes ABCD signals

pickup
amplifier

13

TES signal
generating
circuit

20

A/D
converter

31

FE signal
generating
circuit

14

frequency-voltage
converting circuit

21

input frequency
displacement
signal

optical pickup part

12

focusing
servo circuit

15 focus position
command

focusing position
control part

32

automatic centering
mechanism 11c

W

LD driver
circuit

16 laser ON-OFF
control

laser output
control part

33

disc suction
control circuit

17 centering
start/release

process
controller part

34

motor
driver

18

servo control

servo motor
controller part

35

11a
spindle motor

encoder
amplifier
circuit

encode pulse

control CPU

36

11b
encoder

19

Memory 512Mbyte
HDD 20Gbyte

11

rotational drive circuit

Fig. 2

center of rotation

Sr

L

St

center of tracks

ΔS

Fig. 3

C   B

D   A

4 divided diodes

laser reflection light

advancing direction
of tracks
(rotational direction)

Fig. 4

A,B,C,D light reception information

(a)

(b) A, D light reception information (SA, SD)

(c) B, C light reception information (SB, SC)

land | groove | land

EP 1 517 313 A1

Fig. 5

Fig. 6

(a) TES signal

f= frequency (voltage)

corresponding to 1 rotation of disc

frequency maximum value

(b)

frequency-voltage converted waveform

0    90    180    270    360    90°    spindle rotational angle

Fig. 7

**corresponding to 1 rotation of disc**

f= frequency
(voltage)

(a)

frequency-voltage
converted waveform
before curve interpolation
approximation

f= frequency
(voltage)

(b)

frequency-voltage
converted waveform
after curve interpolation
approximation

0    90    180    270    360    90°

EP 1 517 313 A1

Fig. 8

start measurement

S1 — mount work and
transmit automatic centering command

S2 — suck work

S3 — select measuring layer

S4 — turn on focusing servo

S5 — focusing lock performed — not locked

focusing locked

S6 — rotational speed reach measuring speed — not reached

reached

S7 — read signal corresponding to one circle
of frequency-voltage converted waveform

S8 — analyze read data and
perform smoothing by curve interpolation

S9 — arithmetic processing
of eccentricity

$T \times K \mu m = T \times (30f/N)$

S10 — stop rotation of work and
release automatic centering

S11 — release sucking of work

finish measurement

# EP 1 517 313 A1

## INTERNATIONAL SEARCH REPORT

| International application No. |
|---|
| PCT/JP03/11967 |

**A. CLASSIFICATION OF SUBJECT MATTER**
Int.Cl⁷ G11B7/085

According to International Patent Classification (IPC) or to both national classification and IPC

**B. FIELDS SEARCHED**

Minimum documentation searched (classification system followed by classification symbols)
Int.Cl⁷ G11B7/085

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 64-19538 A (Mitsubishi Electric Corp.), 23 January, 1989 (23.01.89), Full text; Figs. 1 to 4 (Family: none) | 1-4 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 October, 2003 (28.10.03) | 11 November, 2003 (11.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

18